# EUROPEAN PATENT APPLICATION

(11) **EP 1 953 655 A2**
(43) Date of publication of application: **06.08.2008**
(21) Application number: 08100794.0
(22) Date of filing: 23.01.2008
(51) Int. Cl.: G06F 17/30

(54) **Transaction processing system and method**

(30) Priority: 01.02.2007 AU 2007900476
(71) Applicant: ACEI AB, 120 07 Stockholm (SE)
(72) Inventor: Abrink, Ulf, 74683 Bâlsta (SE); Andersson, Sven Hakan, 17264 Sundbyberg (SE)
(74) Representative: Ketelaars, Maarten F.J.M.

(57) **Abstract**

A transaction processing system with a back end database server (110) storing a client data record of a client and a front end database server (120) in data communication with the back end database server (110). The front end database server (120) is arranged to retrieve data from the client data record when the client connects to the front end database server (120) and to thereafter process transactions related to the retrieved data. The front end database server (120) is further arranged to communicate data to the back end database server (110) to update the client data record based on the processed transactions.

## Description

### Field

The present invention relates to a transaction processing system and a transaction processing method.

### Background to the Invention

In the gaming industry, there is a move towards server based gaming systems where the majority of the gaming functions are implemented on a server and the gaming machines played by players are clients of the server.

For such implementations to be effective, transactions between the gaming machines (also known as gaming terminals) and the server need to be carried out in real-time. That is, without any delay that is apparent to the player.

Where there are a larger number of gaming machines connecting to a server, the server can be exposed to high loads and hence in a gaming system with a large number of gaming machines, the server may require significant CPU processing power, particularly in light of the fact that the relationship between increased load and CPU power is not linear. This can result in a high investment cost for hardware.

Accordingly, there is a need for an architecture suitable for a gaming system that is capable of handling high transaction loads.

### Summary of the Invention

In a first aspect, there is disclosed a transaction processing system comprising:
a back end database server storing a client data record of a client; and
a front end database server in data communication with the back end database server, the front end database server arranged to retrieve data from the client data record when the client connects to the front end database server and to thereafter process transactions related to the retrieved data, the front end database server further arranged to communicate data to the back end database server to update the client data record based on the processed transactions.

In an embodiment, the back end database server stores client data records for each of a plurality of clients.

In an embodiment, the transaction system comprises a plurality of front end database servers, each in data communication with the back end database server, the front end database servers arranged to share connection requests from clients amongst one another.

In an embodiment, the transaction system comprises at least one an application server arranged such that each client connects to a front end database server via the application server.

In an embodiment, the transaction system comprises a plurality of clients in data communication with the front end database server.

In an embodiment, each client is a gaming terminal.

In an embodiment, the front end database server processes transactions based on data communicated from the client.

In an embodiment, the transaction system is further arranged to transfer responsibility for processing transactions of a client from a failed front end database to another front end database server.

In a second aspect there is disclosed a transaction processing method comprising:
retrieving data at a front end database server from a back end database server storing a data record for a client when the client connects to the front end database server;
processing transactions related to the retrieved data at the front end database server; and
communicating data from the front end database server to the back end database server required to update the client's data record based on the processed transactions.

In an embodiment, the transaction processing comprises processing transaction related to the retrieved data based on data communicated from the client.

### Brief Description of the Drawings

An embodiment of the invention will now be described in relation to the accompanying drawings in which:

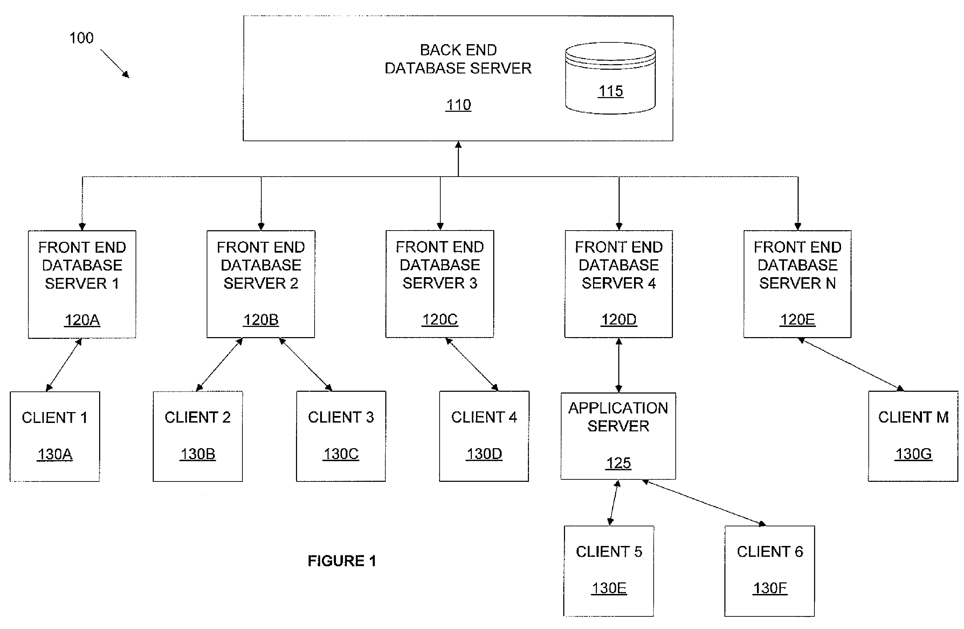

Figure 1 is a block diagram of a transaction processing system; and

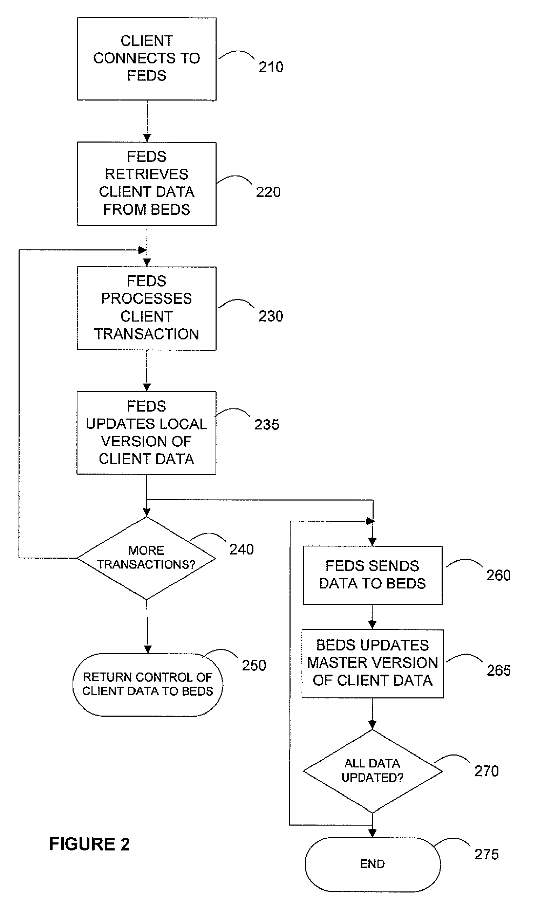

Figure 2 is a flow chart of a transaction processing method.

### Detailed Description

Referring to the drawings there is shown a transaction processing system 100 and method for a database based gaming system that is designed to handle high loads in a real-time environment.

The transaction processing system 100 has a back end database server (BEDS) 110 that is the focal point of the system where all data needed by different nodes is shared. The back end database server 110 is also where all client data is stored. The gaming system 100 has a plurality (N) of front end database servers (FEDS) 120A-120E adapted to receive connection requests from a plurality (M) of clients 130A-130G. Clients 130E and 130F are shown as connecting to front end database server 120D via an application server 125 to illustrate that depending on the embodiment, none, some or all of the clients 130A-130G may connect to a front end database server 120 via an application server 125.

When a front end database server 120 is started, it connects 210 to the back end database server 110. When a front end database server 120 receives a connection request from a client, it either accepts the request or passes the client the identity of another front end database server 130 if this will achieve load balancing between the plurality of front end database servers 120. Load balancing data is communicated between the front end database servers 120.

If the front end database server 120 accepts the request, it requests client data 220 from the back end database server 110. The back end database server 110 retrieves either the entire data record for the client from database 115 or a subset of data that is expected to be accessed frequently. The back end database server 110 then communicates the relevant data to the front end database server 120. Examples of data that may be transferred to the front end database server include status, number of notes, number of coins in the coin acceptor, etc.

Once the front end database server 120 accepts the request it will accept transaction requests from the client 130, for example, to update a current record of the credit meter in the database. The front end database server 120 processes the request 230, updates the local version of the client data and waits 240 for further transactions.

The front end database server 120 also starts a parallel process 260-275 to update the client data stored in database 115 of back end server database. That is the front end data base server 120 sends update data to the back end database server 110 which updates 265 the database 115.

In this manner, the front end database server 120 is able to process the transaction requests in real-time while the back end server 110 is updated in near real-time.

When there are no more transactions, the front end database server 120 returns control of the data to the back end database server 120. This process involves determining that all data has been updated 270 so that the database 115 is synchronised to the data that has been updated locally by the front end database server 120.

A number of additional features provide additional robustness to the handling of transactions. Specifically, the system is designed such that when application servers 125 are employed, a client can fail over from one application server to another and hence that ownership of a client can be moved from one application server or front end database server 120 to another. If application servers are not employed the system is designed so that a client can fail over from one front end database server 120 to another so that ownership of a client can be moved from one front end database server 120 to another. In addition, an application server can be reconfigured to connect to a different front end database server 120. The system can employ "hot" or "cold" standby servers and the front end database servers 120 can fail over to their standby configuration. The back end database server 110 can also fail over to its standby configuration.

Alternatively, or in addition to employing standby services, the system can employ Real Application Clusters which allow multiple instances on different nodes to access a shared database on a cluster system for load balancing.

These and other modifications will be apparent to persons skilled in the art and should be considered as falling within the scope of the invention described herein.

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

It is to be understood that, if any prior art publication is referred to herein, such reference does not constitute an admission that the publication forms a part of the common general knowledge in the art, in Australia or any other country.

## Claims

1. A transaction processing system comprising:
a back end database server storing a client data record of a client; and
a front end database server in data communication with the back end database server, the front end database server arranged to retrieve data from the client data record when the client connects to the front end database server and to thereafter process transactions related to the retrieved data, the front end database server further arranged to communicate data to the back end database server to update the client data record based on the processed transactions.

2. A transaction system as claimed in claim 1, wherein the back end database server stores client data records for each of a plurality of clients.

3. A transaction system as claimed in claim 2, comprising a plurality of front end database servers, each in data communication with the back end database server, the front end database servers arranged to share connection requests from clients amongst one another.

4. A transaction system as claimed in any one of claims 1 to 3, comprising at least one an application server arranged such that each client connects to a front end database server via the application server.

5. A transaction system as claimed in any one of claims 1 to 4 comprising a plurality of clients in data communication with the front end database server.

6. A transaction system as claimed in claim 5, wherein each client is a gaming terminal.

7. A transaction system as claimed in claim 5 or claim 6, wherein the front end database server processes transactions based on data communicated from the client.

8. A transaction system as claimed in claim 3, further arranged to transfer responsibility for processing transactions of a client from a failed front end database to another front end database server.

9. A transaction processing method comprising:
retrieving data at a front end database server from a back end database server storing a data record for a client when the client connects to the front end database server;
processing transactions related to the retrieved data at the front end database server; and
communicating data from the front end database server to the back end database server required to update the client's data record based on the processed transactions.

10. A transaction processing method as claimed in claim 9, comprising processing transaction related to the retrieved data based on data communicated from the client.
